# EUROPEAN PATENT APPLICATION

(11) **EP 2 181 843 A1**
(43) Date of publication of application: **05.05.2010**
(21) Application number: 08018978.0
(22) Date of filing: 30.10.2008
(51) Int. Cl.: B32B 27/00, G09F 3/04

(54) **Multilayered film and in-mold label obtained from said film**

(71) Applicant: Taghleef Industries SPA, 33058 San Giorgio Di Nogaro (UD) (IT)
(72) Inventor: Piasente, Francesca, 33050 Gonars, Udine (IT)
(74) Representative: Metten, Karl-Heinz

(57) **Abstract**

The present invention concerns a mono or biaxially oriented co-extruded multilayered film comprising
a) a core layer having a first and an opposite second surface as well as a first average thickness and comprising a, in particular voided, thermoplastic polymer matrix comprising a polyolefin homo- and/or copolymer, in particular a polypropylene homopolymer,
c) on the side of the first surface of the core layer an outer, printable layer comprising a polyolefin homo-and/or copolymer, in particular a propylene co-polymer, having a third average thickness, and
e) on the side of the second surface of the core layer a contact layer comprising a film comprising at least one polyolefin homo- and/or copolymer, in particular a propylene copolymer, said film having a fourth average thickness, and, partially embedded in said film, polymeric and/or inorganic particles, and wherein the average particle size of at least one of the polymeric and inorganic particles is essentially equal to or greater than the fourth average thickness.

Further the present invention concerns an in-mold label obtained from a film according to the present invention.

## Description

The present invention concerns a multilayered co-extruded film as well as an in-mold label obtained from said film.

Instead of fastening a label to the outer surface of a plastic container by use of adhesives it has become more and more common practice to introduce such labels by way of so-called in-mold labelling techniques. With in-mold labelling a preformed and usually pre-printed polymer film label is introduced into a mold prior to molding a plastic article in said mold. In such a manner the label becomes an integral part of the surface of the molded article. Molding can be accomplished for example, by injection molding or blow molding.

In-mold layers are usually prepared from multilayered co-extruded films, the multilayer structure allowing to adapt the inner and the outer surface to fulfil different requirements. Whereas the outer surface has to be printable and usually also has to have a glossy appearance. The inner surface has to guarantee a reliable bonding to the molded plastic particle. Furthermore, care has to be taken that the outlines of the label are not visible when incorporated into a molded product.

Insofar as in-mold labelling is usually accomplished in highly automated mass production, in-mold labels are provided in the form of stacks comprising a multitude of individual in-mold labels. It has been found that to safely transfer just a single label from such stacks to the mold is not easily accomplished. Therefore, measures have be taken to avoid that the outer surface of an underlying in-mold label keeps sticking to the bottom side of the above lying in-mold label. For this reason, usually at least the outer layers, usually also intermediate layers, of multilayered in-mold labels are treated with antistatic agents. Also, it has been tried to arrive at top and bottom surfaces being less sticky in nature.

In EP 0 611 102 B1 a biaxially oriented multilayered polypropylene film is described in which the bottom layer comprises a blend of incompatible polymers, for example a blend of polyethylene and of a copolymer of propylene and ethylene, and in which the top layer comprises a polyolefin copolymer such as a propylene/ethylene copolymer containing minor amounts of ethylene comonomer units.

In EP 0 862 991 B1 biaxially oriented multilayered in-mold labels are described which comprise a core layer of a voided propylene homopolymer having a density of not more than 0.7 g/cm³, and at least one substantially non-voided layer on each surface of the core layer, the ratio of the combined thicknesses of the non-voided layers on the respective surface of the core layer being from 2:1 1 to 1:1. Such an in-mold label should no longer tend to curl.

In EP 0 344 230 B2 a polymeric film which can be used for the preparation of in-mold labels is disclosed which comprises a non-voided layer of a propylene homopolymer having a layer of voided polypropylene on one side and a layer of a printable polymer on the other side, the non-voided layer of propylene homopolymer being in direct contact with the layer of said printable polymer. The voided layer has to contain 4 to 25 wt.- % of voiding agent, based on the weight of the voided layer, and the non-voided layer does not contain a hard resin and has to be of a thickness of 2.5 to 25 µm.

In-mold labels which should be usable in blow molding processes shall according to DE 199 49 898 A1 be obtained in an inexpensive manner if the inner contact layer has a roughness Rz of at least 3,5 µm. The roughness value Rz of the films has to be determined according to DIN 4768, part 1, and DIN 4777 as well as DIN 4772 and 4774 by using a perthometer type S8P of the company Feinprüf Perthen GmbH, Goettingen, Germany, by employing the so-called touch-cutting procedure ("Tastschnitt-Verfahren"). The inner layer of the in-mold layer of DE 199 49 898 A1 can be obtained by using a blend of at least two incompatible polymers.

EP 0 538 746 A1 discloses a biaxially oriented multilayered film having an opacity according to ASTM-D 1003 of greater 40 and which comprises a base layer of polypropylene and a cover layer containing a blend of high density polyethylene and polypropylene.

Biaxially oriented films having a low coefficient of friction can according to EP 0 545 650 B1 be obtained from a film comprising five co-extruded layers which have been biaxially oriented together. This film has to have a core layer of a voided polypropylene homopolymer with a layer of essentially non-voided polypropylene homopolymer on both sides thereof, and an outer layer of a heat sealable polymer on each of the layers of substantially non-voided polypropylene homopolymer so that the film is rendered heat sealable. The layers of substantially non-voided polypropylene homopolymer each have to have a thickness of from 1 to 5 µm.

Biaxially oriented, co-extruded multilayered in-mold labels are also disclosed in, for example,

EP 0 563 796 B1, EP 0 619 183 B1, and EP 0 367 613 B1.

Although in the meantime quite a number of biaxially oriented co-extruded multilayered in-mold labels are available there is still room for further improvement, in particular as to the handling of such in-mold labels being packed in a stack.

Therefore, the problem underlying the present invention has been to provide a multilayered in-mold label which even by way of automatic processing can be easily and reliably taken from a stack of individual in-mold labels where the risk of adjacent in-mold labels sticking together is highly reduced thereby allowing to reliably transfer just one individual label from a stack of labels in each case. Furthermore, it has been an object of the present invention to provide in-mold labels which are not suffering from the above drawbacks and which in addition allow for adjusting the appearance so that the overall appearance of the in-mold label in the molded plastic article can be optimized.

This problem has been solved by a mono or biaxially oriented co-extruded multilayered film comprising
a) a core layer having a first and an opposite second surface as well as a first average thickness and comprising a, in particular voided, thermoplastic polymer matrix comprising a polyolefin homo- and/or copolymer, in particular a polypropylene homopolymer,
c) on the side of the first surface of the core layer an outer, printable layer comprising a polyolefin homo-and/or copolymer, in particular a propylene co-polymer, having a third average thickness, and
e) on the side of the second surface of the core layer a contact layer comprising a film comprising at least one polyolefin homo- and/or copolymer, in particular a propylene co-polymer, said film having a fourth average thickness, and, partially embedded in said film, polymeric and/or inorganic particles, wherein the fourth average thickness is determined based on said film, the polymeric and inorganic particles not being included, and wherein the average particle size of at least one of the polymeric and inorganic particles is essentially equal to or in particular greater than the fourth average thickness.

By using said polymeric and/or inorganic particles having an average particle size which is essentially equal to or in particular greater than the fourth average thickness the particles protrude from the outer surface of the contact layer. Thereby, that is by having a contact layer from which said polymeric and/or inorganic particles protrude the tendency of adjacent labels made from said films sticking together can be significantly reduced or even eliminated.

Co-extrusion methods to obtain multilayered polymeric films are well known in the art. Usually, the individual layers are obtained by extruding its molten form via a flat film extrusion die. In order to obtain a biaxially oriented multilayered film said film is first oriented in machine direction and subsequently in cross direction, that is, transversely to the machine direction. A mono or a biaxial orientation is usually imparted on the co-extruded multilayered film. The films of the invention are usually mono or biaxially oriented at temperatures in the range from 110°C to 200°C depending on the material employed. In general, orientation in machine direction is preferably conducted at temperatures in the range from 120 to 150°C whereas orientation in transverse direction is preferably conducted at temperatures in the range from 155 to 190°C. Orientation usually also encompasses a subsequent thermal treatment step which serves to fix the film in its oriented mode and which can be accomplished by keeping the oriented film at a temperature in the range from 140 to 160°C from 0.5 to 10 seconds.

The core layer can be voided or non-voided. Voided core layers are preferred. A core layer being voided in the meaning of the present invention usually contains a so-called strata of voids within its thermoplastic, in particular polyolefinic, more preferably polypropylene homopolymer, matrix material. The term "strata of voids" shall be understood in such a way that there is a multitude of voids within the thermoplastic matrix material of the core layer. Usually, the opacity of the core layer is caused by the existence of voids which scatter the light. In order to obtain a voided core layer usually polymeric and/or inorganic particles, so-called void-initiating particles, have been added to the thermoplastic, in particular polypropylene homopolymer, matrix material. These particles are preferably incompatible with said matrix material at the temperature of monoaxial or biaxial orientation. Suitable polymeric and inorganic particles encompass those being made of polybutylene terephthalate, nylon, solid or hollow preformed glass spheres, metal beads or spheres, ceramic spheres, calcium carbonate and mixtures thereof. It is preferred that the average diameter of these void initiating particles is in the range from about 0.1 to about 10 µm. Usually, particle sizes in the range from 2 to 4 µm furnish satisfactory results. Calcium carbonate particles are preferred as a void-initiating particles. Upon orientation of a co-extruded multilayered film the core layer will become a void-filled matrix. The manufacture of the co-extruded multilayered film comprising a voided core layer is well known in the art.

The thermoplastic matrix material of the core layer is usually made of a polyolefin in the form of the homopolymer or copolymer or a blend of such, preferably compatible, polyolefins. Suitable polyolefinic materials include polypropylene, polyethylene, and polybutylene as well as their copolymeric forms, polypropylene being preferred. Particularly preferred is an isotatic polypropylene homopolymer. Isotatic polyproylene homopolymers in the meaning of the present invention shall include those polypropylenes which contain at least about 80 wt.- % of isotactic polypropylene.

In a particularly preferred embodiment the film according to the invention further comprises between the core layer and the outer, printable layer on the side of the first surface of the core layer at least one first intermediate layer comprising a non-voided polyolefin homo and/or copolymer, in particular a polypropylene homopolymer, having a second average thickness. This intermediate layer usually serves to impart a glossy effect on the outer layer.

Though not necessary, it is preferred that the first intermediate layer is directly placed on the first surface of the core layer. It can also be contemplated that additional layers can be introduced between the first intermediate layer and the core layer on the first surface of the core layer and/or between the first intermediate layer and the outer printable layer. The first intermediate layer preferably comprises or consists of non-voided isotactic polypropylene.

And, though preferred, it is not necessary that the outer, printable layer is directly placed on the first intermediate layer so that said first intermediate layer is sandwiched between the core layer and the outer layer.

The propylene copolymer which is preferably used for the outer layer preferably comprises a propylene/ethylene or propylene/butylene copolymer, propylene being the major comonomer repeating unit, or, as a preferred alternative, comprises a propylene/ethylene/higher alpha-olefin terpolymer, again, propylene being the major comonomer repeating unit. Suitable higher alpha-olefin comonomers include, for example, 1-butene, 1-pentene, and 1-hexene, 1-butene being most preferred. The material used for the outer layer besides the aforementioned propylene copolymers can also comprise other polyolefin homo or copolymers in minor amounts, for example, in amounts of less than 5 wt.- %, based on the weight of the outer layer.

A copolymer in the meaning of the present invention is made of two or more comonomeric building units and comprises, for example, binary copolymers and ternary copolymers, so-called terpolymers.

According to a first aspect of the present invention the contact layer can be placed on the side of the second surface of the core layer. With regard to this embodiment it is preferred that said contact layer is directly placed on the second surface of the core layer.

According to a second aspect, at least one second intermediate layer comprising in particular a non-voided polypropylene homopolymer having a fifth average thickness can be placed between the contact layer and the core layer on the side of the second surface of said core layer.

The contact layer preferably comprises at least one propylene copolymer as its major component and in particular consists of such a propylene copolymer. The propylene copolymer which is preferably used for the outer layer preferably comprises a propylene/ethylene or propylene/butylene copolymer, propylene being the major comonomer repeating unit, or, as a preferred alternative, comprises a propylene/ethylene/higher alpha-olefin terpolymer, again, propylene being the major comonomer repeating unit. Suitable higher alpha-olefin comonomers include, for example, 1-butene, 1-pentene, and 1-hexene, 1-butene being most preferred.

The contact layer further comprises partially embedded therein polymeric and/or inorganic particles. These particles represent discrete entities within the material of the film of the contact layer, in particular within the propylene copolymer or the propylene copolymer-containing material of the contact layer, preferably during all phases of the preparation of the mono or biaxially oriented co-extruded multilayered film of the invention. The polymeric and inorganic particles can have a spherical or any other regular or irregular form as long as their average particle size is essentially equal to or greater than the fourth average thickness of the contact layer. It is important that the polymeric particles and/or the inorganic particles at least partially protrude from the outer surface of the contact layer. This is accomplished with respect to the contact layer by using particles having a particle size essentially equal to or greater than the fourth average thickness, and, optionally, with respect to the outer layer by using particles having a particle size essentially equal to or greater than the third average thickness.

According to one embodiment of the present invention it is provided that the core layer, at least one first intermediate layer and/or at least one second intermediate layer contains an inorganic filler, in particular titanium dioxide, and/or at least one antistatic agent.

Suitable antistatic agents include alkali alkylsulfonates, ethoxylated and propoxylated polydialkylsiloxanes and polyalkylphenylsiloxanes, aliphatic tertiary amines having a residue with 10 to 20 carbon atoms substituted with an ω-hydroxy-(C₁-C₄)-alkyl group, N,N-bis-(2-hydroxethyl)-alkylamine having 10 to 20 carbon atoms in the alkyl residue being particularly preferred. Usually the amount of the antistatic agent is in the range from 0.05 to 0.5 wt.- % based on the weight of the layer in which it is present.

In another embodiment it is provided that the first intermediate layer contains an inorganic filler, in particular titanium dioxide, and that the core layer and/or the second intermediate layer is/are essentially free of any inorganic filler, in particular free of titanium dioxide.

Preferably, the inorganic filler, in particular titanium dioxide, is present in the layer or layers in which it is present in an amount of up to 40 wt.- % based on the weight of the layer in which it is present.

The contact layer preferably comprises polymeric and/or inorganic particles having an average particle size which is at least 20 %, in particular at least 40 %, greater than the fourth average thickness, and which, optionally, is at least 20 %, in particular at least 40 %, greater than the third average thickness. In one preferred embodiment polymeric and/or inorganic particles have an average particle size which is at least 50 % greater than the fourth and, optionally, the third average thickness.

In another embodiment, it is provided that the outer layer comprises at least 90 wt.- % based on the total weight of said layer of a copolymer being made of propylene as the major comonomer, ethylene and at least one additional alpha-olefin comonomer, 1-butene being preferred as the alpha-olefin.

It has been found to be a suitable embodiment wherein the contact layer comprises at least 90 wt.- % based on the total weight of said layer of a copolymer being made of propylene as the major comonomer, ethylene and at least one additional alpha-olefin conmonomer, 1-butene being preferred as the alpha-olefin.

In a most preferred embodiment, the polymeric particles comprise or even more preferred consist of PMMA particles, and/or the inorganic particles comprise or even more preferred consist of silica particles. Mixtures of polymeric particles and inorganic particles are also preferred.

In this context, a suitable film of the present invention is **characterized in that** the contact layer comprises no more than 20 wt.- % of polymeric and/or inorganic particles having a particle size essentially equal to or in particular greater than the fourth average thickness.

Preferably, it is also provided that the outer layer comprises no more than 15 wt.- % of polymeric and/or inorganic particles having a particle size essentially equal to or in particular greater than the third average thickness.

Interestingly, the risk of adjacent labels sticking together in a stack of labels can already be substantially reduced or even eliminated by using as little as about 0.25 or 0.4 wt.-% of polymeric and/or inorganic particles based on the total weight of the contact layer (or, optionally, the outer layer). Accordingly, in one embodiment the contact layer and, optionally, the outer layer comprises from about 0.1 to 1.0 wt.-%, in particular from 0.15 to 0.6 wt.-% of polymeric and/or inorganic particles having a particle size essentially equal to or in particular greater than the fourth average thickness or, respectively, the third average layer.

In one embodiment the average particle size of the polymeric and/or inorganic particles used for the contact layer will be in the range from 3 µm to 6 µm, for example 4 µm, in particular if the average thickness of the contact layer is about 2 µm.

It is also possible that the outer layer and/or the contact layer have been treated to increase the surface energy thereof. Such a treatment usually includes, for example, a corona discharge treatment or a flame treatment. It is preferred to exclusively treat the outer surface of the outer layer, and, optionally, the outer surface of the contact surface.

According to one example of suitable film of the present invention it can be provided that the film according to any of the preceding claims, wherein the third average thickness is in the range from 0.5 to 5.0 µm, in particular from 0.5 to 3.0 µm, the second average thickness is in the range from 1.0 to 15 µm, in particular from 1.0 to 5.0 µm, the first average thickness is in the range from 15 to75 µm, in particular from 20 to 65 µm, the fifth average thickness is in the range from 1.0 to 20 µm, in particular from 1.0 to 15 µm, and/or the fourth average thickness is in the range from 0.5 to 5.0 µm, in particular from 1.0 to 3.0 µm.

The total thickness of the multilayered film of the prevent invention usually lies in the range from about 18 µm to about 120 µm, preferably from about 50 µm to about 90 µm. How to determine the thickness of the multilayered film as well as the thicknesses of the individual layers or films is well known to the person skilled in the art. The thickness of these films can be determined by use of microscopy and so-called microtome cuts.

The multilayered films of the present invention are most suited to be used for the preparation of in-mold labels. Such in-mold labels usually are provided in the form of stacks comprising a multitude, preferably at least 10, of such labels. Usually hundreds of such labels are combined in one stack to be used in the production of plastic articles comprising in-mold labels. The in-mold labels of the present invention can be used both for the production of injection molded articles as well as for the production of blow molded articles.

With the present invention it has surprisingly been found that by use of a multilayered film which comprises a contact layer in which polymeric and/or inorganic particles are embedded the average particle size of which is essentially equal to or in particular greater than the average thickness of said contact layer material, the risk of stacked in-mold labels sticking together is highly minimized if not completely eliminated. By use of said polymeric and/or inorganic particles in the contact layer and, if need be, in the outer layer the coefficient of friction can be substantially reduced and, simultaneously, the anti-blocking properties can be markedly enhanced even when the respective surfaces have been corona or flame treated.

The invention, together with further objects and advantages, may be best understood, by example, with reference to the following description of the following embodiments taken together with the accompanying drawings, in which
- Figure 1: shows a schematic cross-sectional view of a biaxially oriented, co-extruded multi-layered film of the present invention,
- Figure 2: shows a schematic cross-sectional view of another embodiment of a biaxially oriented, co-extruded multilayered film of the present invention,
- Figure 3: is a schematic enlarged cross-sectional view of a part of the contact layer of a multilayered film of the present invention, and
- Figure 4: is a schematic enlarged cross-sectional view of a part of the contact layer of a multilayered film of another embodiment of the present invention.

In the following, embodiments of a multilayered film according to the present invention are described by way of an example.

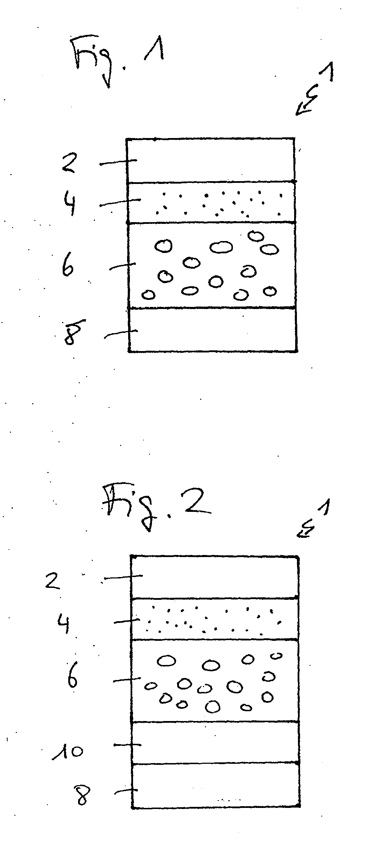

In figure 1 a cross-section of a biaxially oriented co-extruded film 1, which is according to the invention, is shown comprising in total four layers, namely outer layer 2, first intermediate layer 4, core layer 6 and contact layer 8. The average thicknesses of these layers are as follows: 2 = 1.0 µm, 4 = 3.0 µm, 6 = 60 µm, and 8 = 2.0 µm. The outer layer 2 comprises about 98 wt.- % of a terpolymer comprising propylene as the major comonomer building unit as well as ethylene in the range from 3 to 3.5 wt.- % and 1-butene in the range from 5.5 to 6.5 wt.- % as well as about 2 wt.- % of a non-migrating antiblocking masterbatch based on a terpolymer comprising propylene as the major comonomer building unit as well as PMMA particles having an average particle size of about 4 µm being embedded in the terpolymer. The first intermediate layer 4 comprises 65 wt.- % of a polypropylene homopolymer, 33 wt.- % titanium dioxide and 2 wt.- % of an antistatic master batch. The voided core layer 6 comprises a polypropylene homopolymer and about 2 wt.- % of an antistatic masterbatch. And, the contact layer 8 is made from a terpolymer comprising propylene as the major comonomer building unit as well as ethylene (about 3 to 3.5 wt.-%) and 1-butene (about 5.5 to 6.5 wt.- %) in an amount of about 90 wt.- % as well as from PMMA particles having an average particle size of about 4 µm and silicate particles also having an average particle size of about 4 µm.

The embodiment depicted in figure 2 differs from that of figure 1 in that between core layer 6 and the contact layer 8 a second intermediate layer 10 has been incorporated. Said second intermediate layer 10 comprises non-voided polypropylene homopolymer.

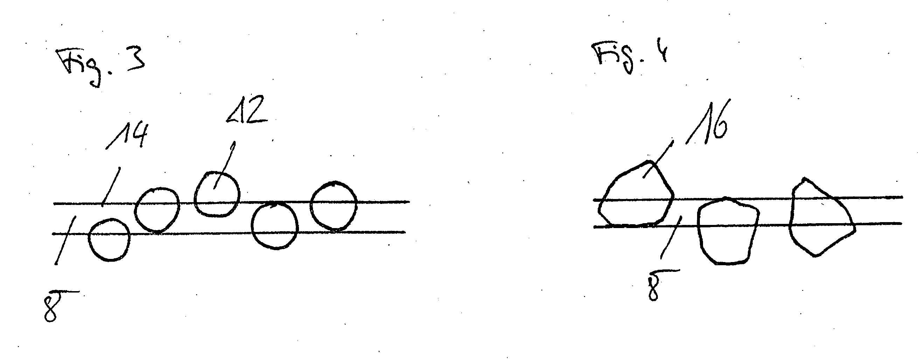

From figures 3 and 4 schematically an enlarged sections of a contact layer 8 of a multilayered film 1 of the present invention are shown. The circles depicted in figure 3 shall represent PMMA particles 12. These particles have a greater average particle size than the average thickness of the contact layer 8. For this reason a significant number of PMMA particles is protruding from the outer surface 14 of said contact layer 8. The same applies if inorganic particles such as silicate particles are used as is for example shown in figure 4. The silicate particles 16 due to their larger size are only partially embedded in the contact layer 8 and are therefore also protruding from its surface.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, the figures as well as the claims could be essential alone or in every combination for the realization of the invention in its different embodiments.

## Claims

1. Mono or biaxially oriented co-extruded multilayered film comprising
a) a core layer having a first and an opposite second surface as well as a first average thickness and comprising a, in particular voided, thermoplastic polymer matrix comprising a polyolefin homo- and/or copolymer, in particular a polypropylene homopolymer,
c) on the side of the first surface of the core layer an outer, printable layer comprising a polyolefin homo-and/or copolymer, in particular a propylene co-polymer, having a third average thickness, and
e) on the side of the second surface of the core layer a contact layer comprising a film comprising at least one polyolefin homo- and/or copolymer, in particular a propylene copolymer, said film having a fourth average thickness, and, partially embedded in said film, polymeric and/or inorganic particles, and wherein the average particle size of at least one of the polymeric and inorganic particles is essentially equal to or greater than the fourth average thickness.

2. The film according to claim 1 further comprising
b) between the core layer and the outer, printable layer on the side of the first surface of the core layer at least one first intermediate layer comprising a non-voided polyolefin homo and/or copolymer, in particular a polypropylene homopolymer, having a second average thickness.

3. The film according to claim 1 or 2 further comprising
d) between the core layer and the contact layer at least one second intermediate layer comprising a non-voided polyolefin homo- and/or copolymer, in particular a polypropylene homopolymer, having a fifth average thickness.

4. The film according to any of the preceding claims, wherein the core layer, at least one first intermediate layer and/or at least one second intermediate layer and/or the core layer contains an inorganic filler, in particular titanium dioxide, and/or at least one antistatic agent.

5. The film according to any of the preceding claims, wherein the first intermediate layer contains an inorganic filler, in particular titanium dioxide, and wherein the core layer and/or the second intermediate layer is/are essentially free of an inorganic filler, in particular free of titanium dioxide.

6. The film according to claim 4 or 5, wherein the inorganic filler, in particular titanium dioxide, is present in the layer or layers in which it is present in an amount of up to 40 wt.- % based on the weight of the layer in which it is present.

7. The film according to any of the preceding claims, wherein the outer layer comprises polymeric and/or inorganic particles wherein the average particle size of at least one of the polymeric and inorganic particles is essentially equal to or greater than the third average thickness.

8. The film according to any of the preceding claims, wherein the contact layer comprises polymeric and/or inorganic particles having an average particle size which is at least 20 %, in particular at least 40 %, greater than the fourth average thickness, and optionally wherein the outer layer comprises polymeric and/or inorganic particles having an average particle size which is at least 20 %, in particular at least 40 %, greater than the third average thickness.

9. The film according to any of the preceding claims, wherein the outer layer comprises at least 90 wt.- % based on the total weight of said layer of a copolymer being made of propylene as the major comonomer, ethylene and at least one additional alpha-olefin comonomer, in particular 1-butene.

10. The film according to any of the preceding claims, wherein the contact layer comprises at least 90 wt.- % based on the total weight of said layer of a copolymer being made of propylene as the major comonomer, ethylene and at least one additional alpha-olefin comonomer, in particular 1-butene.

11. The film according to any of the preceding claims, wherein the contact layer comprises no more than 20 wt.- % of polymeric and/or inorganic particles having a particle size essentially equal to or greater than the fourth average thickness.

12. The film according to any of the preceding claims, wherein the outer layer comprises no more than 15 wt.- % of polymeric and/or inorganic particles having a particle size essentially equal to or greater than the fourth average thickness.

13. The film according to any of the preceding claims, wherein the outer layer and/or the contact layer have been treated to increase the surface energy thereof.

14. The film according to any of the preceding claims, wherein the polymeric particles comprise or consist of PMMA particles or wherein the inorganic particles comprise or consist of silica particles.

15. The film according to any of the preceding claims, wherein the contact layer comprises polymeric particles, in particular PMMA, and inorganic particles, in particular silica particles, both having an average particle size essentially equal to or greater than the fourth average thickness.

16. The film according to any of the preceding claims, wherein the outer layer comprises polymeric particles, in particular PMMA, and inorganic particles, in particular silica particles, both having an average particle size essentially equal to or greater than the third average thickness.

17. The film according to any of the preceding claims, wherein the third average thickness is in the range from 0.5 to 5.0 µm, in particular from 0.5 to 3.0 µm, the second average thickness is in the range from 1.0 to 15 µm, in particular from 1.0 to 5.0 µm, the first average thickness is in the range from 15 to 75 µm, in particular from 20 to 65 µm, the fifth average thickness is in the range from 1.0 to 20 µm, in particular from 1.0 to 15 µm, and/or the fourth average thickness is in the range from 0.5 to 5.0 µm, in particular from 1.0 to 3.0 µm.

18. In-mold label obtained from a film according to any of the preceding claims.

19. Stack of labels comprising a multitude of, in particular at least 10, labels according to claim 18.

20. Use of the film according to any of claims 1 to 17 for the preparation of in-mold labels.

21. Injection molded article comprising at least one label according to claim 18.

22. Blow molded article comprising at least one label according to claim 18.
